# EUROPÄISCHE PATENTANMELDUNG

(11) **EP 1 024 508 A2**
(43) Veröffentlichungstag der Anmeldung: **02.08.2000**
(21) Anmeldenummer: 99123301.6
(22) Anmeldetag: 22.11.1999
(51) Int. Cl.: H01G 5/16, H01G 5/18

(54) **Elektrostatisch durchstimmbare Kapazität**

(30) Priorität: 29.01.1999 DE 19903571
(71) Anmelder: FRAUNHOFER-GESELLSCHAFT ZUR FÖRDERUNG DER ANGEWANDTEN FORSCHUNG E.V., 80636 München (DE)
(72) Erfinder: Schiele, Ignaz Dipl.-Ing., 85111 Adelschlag (DE); Engelke, Oliver, 85241 Herbertshausen (DE); Hillerich, Bernd Dr.-Ing., 89075 Ulm (DE)
(74) Vertreter: Schoppe, Fritz, Dipl.-Ing.

(57) **Zusammenfassung**

Eine elektrostatisch durchstimmbare Kapazität umfaßt eine nicht-beweglichen Elektrode (102), die in einer ersten Hauptoberfläche (106) eines Substrats (108) angeordnet ist, und eine beweglichen Elektrode (112), die in einer Funktionsschicht (110), die mit dem Substrat (108) verbunden ist, in einem Bereich gebildet ist, der der nicht-beweglichen Elektrode (102) in dem Substrat (108) im wesentlichen gegenüberliegt. Die nicht-bewegliche Elektrode (102) ist derart in einer Vertiefung (104) des Substrats (108) angeordnet, daß die nicht-bewegliche Elektrode (102) von der Funktionsschicht (112) beabstandet ist.

## Beschreibung

Die vorliegende Erfindung bezieht sich auf eine elektrostatisch durchstimmbare Kapazität und auf ein Verfahren zum Herstellen derselben, und insbesondere auf eine stufenlos, elektrostatisch durchstimmbare mikromechanische Kapazität und ein Verfahren zu deren Herstellung.

Durchstimmbare Kapazitäten mit hoher Güte Q werden beispielsweise in durchstimmbaren Oszillatoren, sogenannten VCOs = Voltage-Controlled Oscillators = spannungsgesteuerte Oszillatoren, bei Hochfrequenz- und Mikrowellenschaltungen benötigt. Kapazitätsdioden, die auch als Varactor-Dioden bezeichnet werden, haben dabei die Aufgabe, die Kapazität zu verändern. Durch Anlegen einer Sperrspannung Uₐ ändert sich die Raumladungsverteilung in der Sperrschicht dieser Dioden und damit deren Kapazität. Dabei nimmt mit zunehmender Sperrspannung die Kapazität ab. Typischerweise wird eine Kapazitätsveränderung von 10...2 pF für Uₐ = 1...10 V erreicht. Diese Dioden haben jedoch Nachteile, die sich vor allem bei Mikrowellen-Oszillatoren bemerkbar machen. So führt beispielsweise der hohe Serienwiderstand zu geringen Schwingkreisgüten Q, und bei höheren Frequenzen nimmt das Rauschen zu. Ein weiterer Nachteil besteht darin, daß der Kapazitätsbereich dieser Dioden nach unten auf etwa 2 pF begrenzt ist.

Im Stand der Technik wurden in letzter Zeit zwei Ansätze verfolgt, um durchstimmbare Kapazitäten in der Form von Plattenkondensatoren mit hoher Güte Q zu realisieren. Ein Ansatz besteht darin, ferroelektrische Materialien als Dielektrikum zu verwenden, und der andere Ansatz verfolgt das Ziel, den Luftspalt zwischen zwei Kondensatorplatten zu verändern bzw. zu kontrollieren.

Aus der Veröffentlichung von Mark V. Raymond, u. a., "Sputter Deposition of SrTiO₃ thin films for voltage tunable capacitors", in Integrated Ferroelectrics 1997, Band 17, Seiten 247-256 wird der Einsatz ferroelektrischer Materialien als Dielektrikum beschrieben. Nachdem die dielektrische Konstante von ferroelektrischen Materialien von der elektrischen Feldstärke abhängig ist, kann dieses Verhalten der dielektrischen Konstante für eine spannungsgesteuerte, durchstimmbare Kapazität benutzt werden. Nachteile dieser Lösung bestehen in dem extrem temperaturabhängigen Verhalten der verwendeten Materialien, dem geringen Durchstimmbereich und der Tatsache, daß die ferroelektrischen Werkstoffe noch nicht standardmäßig abgeschieden werden können und sich noch in der Erprobung befinden. Somit sind die werkstoffseitigen Voraussetzungen für deren Einsatz noch nicht erfüllt.

Eine weitere Möglichkeit, um durchstimmbare Kapazitäten mit ausgezeichneten Eigenschaften herzustellen, bietet die Mikrostrukturtechnologie. Hier können dünnste Schichten im sub-µm Bereich mit kleinsten Bauteilen im sub-mm Bereich kombiniert werden, so daß mit dem Aufbau eines Plattenkondensators Kapazitäten im fF- und pF-Bereich definiert werden können. Hierbei ist eine Platte beweglich angeordnet, wodurch der Luftspalt zwischen den Platten variiert werden kann, was zu einer veränderlichen Kapazität führt.

Die US-A-5,696,622 offenbart eine Anordnung von freistehenden mikromechanischen Balken, die mit einer festen Bodenelektrode eine Kapazität bilden. Bei Anlegen einer Spannung werden die Einzelbalken zu dem Substrat, auf dem die feste Bodenelektrode angeordnet ist, hin ausgelenkt, wodurch die Kapazität der Anordnung verändert wird. Ist diese Spannung größer als die sogenannte Schnappspannung, werden die Balken so weit ausgelenkt, bis sie auf einer Isolatorschicht aufliegen. Da die Balken einzeln angesteuert werden, erhält man eine digital durchstimmbare Kapazität. Um eine feinere Abstimmung zu erhalten, werden die einzelnen Balken mit unterschiedlicher Breite ausgeführt.

Die US-A-5,619,061 zeigt eine allseitig eingespannte Membran, die einen Mikrostreifenleiterspalt durch kapazitive Kopplung überbrückt. Die Membran wird elektrostatisch betätigt, und durch Anlegen einer Spannung, die größer als die Schnappspannung ist, wird die Membran zum Substrat hin ausgelenkt, bis sie dort aufliegt. Hierdurch erhöht sich die Kapazität, und das Überkoppeln von Signalen in den benachbarten Leiter findet verstärkt statt. Gemäß dieser Anordnung kann die Kapazität jedoch nur in zwei Stufen (offener oder geschlossener Zustand) abgestimmt werden.

Ein Nachteil der gerade beschriebenen zwei Anordnungen besteht jedoch darin, daß diese jeweils nur eine stufenweise Abstimmung der Kapazität ermöglichen.

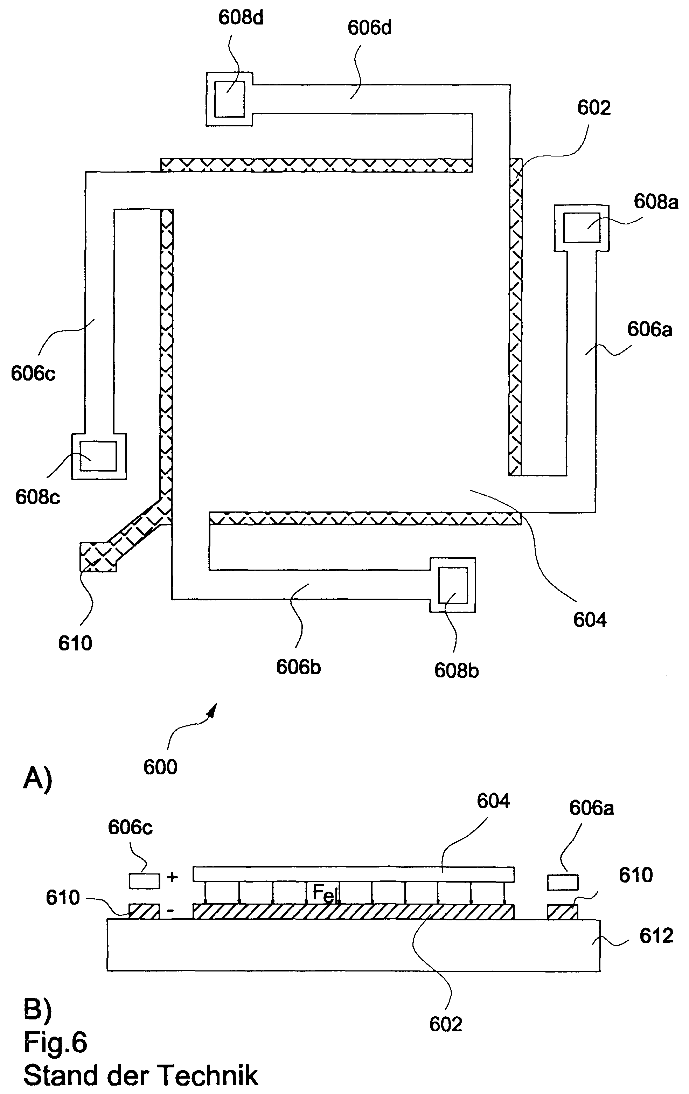

In dem Aufsatz von C. T. - C. Nguyen, "Micromachining Technologies for Miniaturized Communication Devices", Proc. SPIE Conference on Micromachined Devices and Components IV, SPIE Band 3514, September 1998, Seiten 24-37 wird eine elektrostatisch betätigte, kontinuierlich veränderliche Kapazität beschrieben, bei der die bewegliche Elektrode aus einer metallischen Membran besteht, die an vier Federbalken aufgehängt ist. In Fig. 6 ist die aus diesem Artikel bekannte Kapazität dargestellt, wobei Fig. 6A eine schematische Darstellung in Draufsicht, und Fig. 6B eine schematische Querschnittsdarstellung zeigt.

Wie in Fig. 6A zu erkennen ist, umfaßt die Kapazität 600 eine untere, nicht-bewegliche Elektrode 602, die aus einem Metall gebildet ist, und eine obere, bewegliche Elektrode 604, die ebenfalls aus einem Metall gebildet ist. Die obere Elektrode 604 ist an vier Federbalken 606a bis 606d aufgehängt, wobei jeder der Federbalken einen Bereich aufweist, in dem metallische Anschlußflächen 608a bis 608d vorgesehen sind. Die untere Elektrode 602 umfaßt ebenfalls zumindest eine Anschlußfläche 610, die dadurch gebildet ist, daß die zur Erzeugung der Elektrode 602 verwendete Metallisierungsstruktur entsprechend der Darstellung in Fig. 6A geformt wurde. Wie aus Fig. 6B ferner zu sehen ist, ist die untere Elektrode 602 sowie die Anschlußflächen 610 derselben auf einem isolierenden Substrat 612 angeordnet.

Wird nun zwischen die jeweiligen Anschlußflächen der beweglichen Elektrode 604 und der nicht-beweglichen Elektrode 602 eine Spannung angelegt, wie sie in Fig. 6B durch die Zeichen "+" und "-" schematisch dargestellt ist, wird sich zwischen den Elektroden 602 und 604 ein elektrostatisches Feld und damit eine anziehende Kraft aufbauen, wie dies in Fig. 6B dargestellt ist. Abhängig von der zwischen den Elektroden angelegten Spannung U stellt sich der Abstand d zwischen den Elektroden so ein, daß sich die elektrostatische Kraft Fₑ₁ und die durch die Federbalken 606a bis 606d hervorgerufene Rückstellkraft gerade kompensieren. Eine Änderung der angelegten Spannung U ermöglicht also eine Änderung des Abstandes d und damit eine Änderung der durch die Elektroden 602 und 604 gebildeten Kapazität.

Neben den oben ausgeführten Nachteilen der erstgenannten Kapazitäten gemäß dem zweiten Ansatz weisen sämtliche Kapazitäten, welche gemäß dem zweiten Ansatz unter Verwendung der Mikrostrukturtechnologie hergestellt wurden, weitere Nachteile auf. Die oben beschriebenen veränderlichen Kapazitäten werden jeweils mittels eines Oberflächenmikromechanikprozesses hergestellt, wobei in diesem Zusammenhang zum Aufbau Dünnschichten aufgetragen werden, welche unter Eigenspannungen stehen. Beim Erzeugen der beweglichen Elektrode führt dies oft zu Verwerfungen der beweglichen Struktur, die eine reproduzierbare Einstellung der Kapazität nicht zulassen.

Darüberhinaus wird zur Definition des Abstandes zwischen den Elektroden eine sogenannte Opferschicht benötigt, die nur in begrenzter Dicke aufgetragen werden kann, so daß der Abstand zwischen den Elektroden nur innerhalb einer bestimmten Bandbreite eingestellt werden kann. Um die obere Elektrode beweglich zu machen, ist es erforderlich, die aufgebrachte Opferschicht zu entfernen, was mit einem weiteren Problem einhergeht: die Entfernung dieser Opferschicht ist häufig problematisch, da es zu einem Anhaften der Struktur auf dem Substrat kommen kann, dem sogenannten "Sticking" = Kleben nach dem Opferschichtätzen. Dies verschlechtert die Ausbeute bei der Herstellung solcher Kapazitäten.

Ein weiterer Nachteil dieser bekannten Kapazitäten besteht darin, daß beim Betrieb der durchstimmbaren Kapazitäten die beweglichen Elektroden zum Substrat hin ausgelenkt werden können, bis sie dort aufliegen. Dieses vollständige Aufliegen erhöhte die Gefahr des Anhaftens der Struktur auf dem Substrat, da die Adhäsionskräfte abstandsabhängig sind und beim Aufliegen der Struktur besonders starke Wirkung haben. Dies wird auch als "Sticking" im Betrieb bezeichnet. Tritt dieses "Sticking" auf, ist die Kapazität in der Regel nicht mehr durchstimmbar, also unbrauchbar.

Ausgehend von diesem Stand der Technik liegt der vorliegenden Erfindung die Aufgabe zugrunde, eine verbesserte, elektrostatisch stufenlos durchstimmbare Kapazität und ein Verfahren zu deren Herstellung zu schaffen.

Diese Aufgabe wird durch eine elektrostatisch durchstimmbare Kapazität gemäß Anspruch 1 und durch ein Verfahren zum Herstellen einer elektrostatisch durchstimmbaren Kapazität gemäß Anspruch 10 gelöst.

Die vorliegende Erfindung schafft eine elektrostatisch durchstimmbare Kapazität, mit einer nicht-beweglichen Elektrode, die in einer ersten Hauptoberfläche eines Substrats angeordnet ist, und einer beweglichen Elektrode, die in einer Funktionsschicht, die mit dem Substrat verbunden ist, in einem Bereich gebildet ist, der der nicht-beweglichen Elektrode in dem Substrat im wesentlichen gegenüberliegt, wobei die nicht-bewegliche Elektrode derart in einer Vertiefung des Substrats angeordnet ist, daß die nicht-bewegliche Elektrode von der Funktionsschicht (112) beabstandet ist.

Gemäß der vorliegenden Erfindung wird ferner ein Verfahren zur Herstellung einer elektrostatisch durchstimmbaren Kapazität beschaffen, bei dem zunächst eine nicht-beweglichen Elektrode in einer Vertiefung in einer Hauptoberfläche eines Substrats angeordnet wird, und anschließend eine Funktionsschicht auf der Hauptoberfläche des Substrats aufgebracht wird, wobei die nicht-bewegliche Elektrode nach dem Aufbringen der Funktionsschicht von dieser beabstandet ist. Abschließend wird eine bewegliche Elektrode in der Funktionsschicht in einem Bereich, der der Vertiefung in dem Substrat im wesentlichen gegenüberliegt, gebildet.

Gemäß der vorliegenden Erfindung wird die bewegliche Elektrode in der Funktionsschicht durch einem Fachmann bekannte Mikrostrukturierungsverfahren gebildet.

Ein Vorteil der vorliegenden Erfindung besteht darin, daß diese eine mikromechanische Kapazität schafft, die stufenlos abstimmbar ist, und gemäß einem bevorzugten Ausführungsbeispiel besteht die Funktionsschicht aus einem eigenspannungsfreien Material, wie z. B. einkristallines Silizium, wodurch die oben beschriebenen Nachteile bezüglich der Verwerfungen bei der Herstellung der beweglichen Elektrode vermieden werden. Die Verwendung des eigenspannungsfreien Materials hat den Vorteil, daß die Kapazität im Ruhestand genau eingestellt werden kann.

Gemäß einem weiteren Vorteil der vorliegenden Erfindung ist es aufgrund des erfindungsgemäßen Herstellungsverfahrens möglich, die Startkapazität in weiten Bereichen einzustellen, indem gemäß der vorliegenden Erfindung der Luftspalt zwischen der beweglichen Elektrode und der Elektrode auf dem Substrat in einer Bandbreite von 0,3 bis 500 Mikrometer durch die Tiefe der Vertiefung in dem Substrat eingestellt werden kann.

Wiederum ein weiterer Vorteil der vorliegenden Erfindung besteht darin, daß während des Herstellungsprozesses das oben angesprochene "Sticking"-Problem gänzlich vermieden wird, da die erfindungsgemäße Kapazität ohne Opferschichtätzprozeß hergestellt werden kann. Auch das "Sticking"-Problem bei dem Betrieb der Kapazität wird vermieden, dadurch, daß die bewegliche Elektrode bzw. die vertieft liegende feste Elektrode in der Fläche so strukturiert werden, so daß eine großflächige Berührung der beweglichen Struktur mit dem Substrat bzw. der dort befindlichen festen Elektrode nicht stattfindet.

Nachfolgend werden anhand der beiliegenden Zeichnungen bevorzugte Ausführungsbeispiele der vorliegenden Erfindung näher beschrieben. Es zeigen:
- Fig. 1: eine schematische, isometrische Querschnittsdarstellung einer stufenlos, elektrostatisch durchstimmbaren mikromechanischen Kapazität gemäß einem ersten Ausführungsbeispiel der vorliegenden Erfindung;
- Fig. 2A-E: eine schematische Darstellung der Schritte des erfindungsgemäßen Verfahrens zur Herstellung der Kapazität aus Fig. 1;
- Fig. 3: eine schematische Darstellung der Struktur des zweiten Substrats gemäß einem zweiten Ausführungsbeispiel der vorliegenden Erfindung;
- Fig. 4: eine schematische Darstellung der erfindungsgemäßen Kapazität unter Verwendung des zweiten Substrats, wie es in Fig. 3 gezeigt ist;
- Fig. 5A: eine schematische Darstellung der erfindungsgemäßen Kapazität gemäß einem dritten Ausführungsbeispiel;
- Fig. 5B: ein Ersatzschaltbild der Kapazität aus Fig. 5A mit zusätzlicher Beschaltung; und
- Fig. 6A und B: eine schematische Darstellung einer herkömmlichen Kapazität.

In der nachfolgenden Beschreibung der bevorzugten Ausführungsbeispiele der vorliegenden Erfindung, werden für gleiche oder ähnliche Elemente in unterschiedlichen Figuren gleiche Bezugszeichen verwendet.

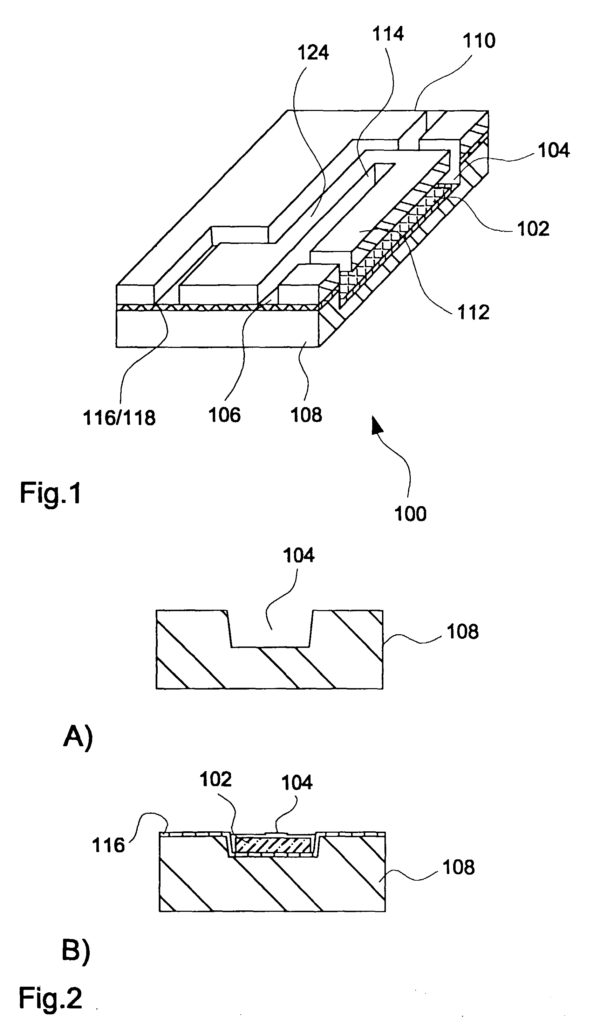

Die Fig. 1 ist eine schematische, isometrische Querschnittsdarstellung eines stufenlos, elektrostatisch durchstimmbaren mikromechanischen Kapazitätsbauelements gemäß einem ersten Ausführungsbeispiel der vorliegenden Erfindung. Die Kapazität ist in ihrer Gesamtheit mit dem Bezugszeichen 100 versehen und umfaßt eine nicht-bewegliche Elektrode 102, die in einer Vertiefung 104 angeordnet ist. Die Vertiefung 104 ist in einer ersten Hauptoberfläche 106 eines ersten Substrats bzw. Substrats 108 gebildet. Ein zweites Substrat bzw. eine Funktionsschicht 110 ist mit dem ersten Substrat 108 verbunden und umfaßt eine bewegliche Elektrode 112, welche in einem Bereich des zweiten Substrats 110 gebildet ist, der der Vertiefung 104 in dem ersten Substrat 108 im wesentlichen gegenüberliegt. Wie aus Fig. 1 zu erkennen ist, ist die nicht-bewegliche Elektrode 102 derart angeordnet, daß diese in der Ruhestellung von dem zweiten Substrat 110 beabstandet angeordnet ist.

Fig. 1 zeigt ein erstes, einfaches Ausführungsbeispiel der erfindungsgemäßen Kapazität, gemäß der das zweite Substrat 110 derart strukturiert ist, daß, wie dies durch den geätzten Abschnitt 114 angedeutet ist, die bewegliche Elektrode 112 durch einen Membranbereich über der Vertiefung 104 gebildet ist. Die auf dem ersten oder unteren Substrat 108 gebildete untere Elektrode 102, die z.B. aus Metall besteht, ist derart strukturiert, daß sie unterhalb der Hauptoberfläche 106 des ersten Substrats 108 liegt, also nicht über die Hauptoberfläche 106 hinaussteht. Im Bereich oberhalb der unteren Elektrode 102 befindet sich die bewegliche Elektrode 112, und durch Anlegen einer Spannung zwischen die beiden Elektroden bildet sich eine elektrostatische Kraft aus, die die bewegliche Elektrode 112 nach unten zieht, bis sich das Kräftgleichgewicht zwischen elektrostatischer Kraft und durch die Federbalken 124 verursachter Rückstellkraft einstellt. Die elektrostatische Kraft läßt sich durch eine Variation der angelegten Spannung verändern, so daß die Durchsenkung der beweglichen Elektrode 112 und somit die Kapazität eingestellt werden kann, wodurch eine durchstimmbare, mikromechanische Kapazität erhalten wird. Die erfindungsgemäße, durchstimmbare Kapazität 100 wird mit Betätigungsspannungen betrieben, die kleiner sind als die Schnappspannung, so daß ein Durchschlagen der Membran 112 auf das Substrat 108 vermieden wird, so daß auch ein Anhaften der oberen Struktur an der unteren Struktur nicht auftritt.

Erfindungsgemäß wird die in Fig. 1 dargestellte Kapazität 100 dadurch hergestellt, daß zunächst die Vertiefung 104 in das Substrat eingebracht wird, dann die nicht-bewegliche Elektrode 112 in der Vertiefung 104 in der Hauptoberfläche 106 des Substrats 108 hergestellt wird, und anschließend die Funktionsschicht 110 auf der Hauptoberfläche 106 des Substrats 108 aufgebracht wird, wobei die nicht-bewegliche Elektrode 102 nach dem Aufbringen der Funktionsschicht 110 von dieser beabstandet ist. Zwischen dem Substrat 108 und der Funktionsschicht 110 befindet sich eine Isolatorschicht 116/118. Anschließend wird in der Funktionsschicht 110 die bewegliche Elektrode 112 in einem Bereich, der der Vertiefung 104 in dem Substrat 108 im wesentlichen gegenüberliegt, und die Federbalken strukturiert.

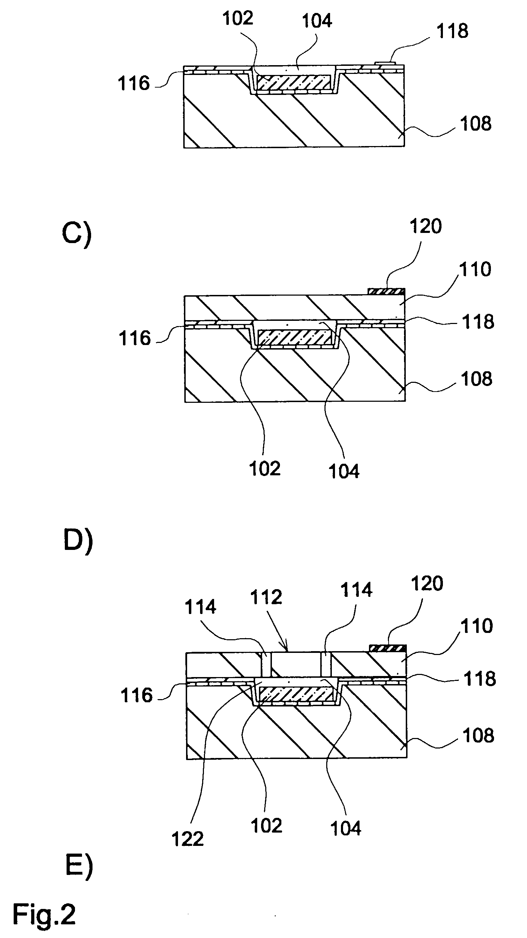

Nachfolgend wird anhand der Fig. 2 ein bevorzugtes Ausführungsbeispiel des erfindungsgemäßen Verfahrens zur Herstellung der in Fig. 1 gezeigten durchstimmbaren mikromechanischen Kapazität näher beschrieben.

In Fig. 2A ist das Substrat 108 gezeigt, welches z. B. ein Silizium-Substrat ist, in welches mittels eines Silizium-Tiefenätzverfahrens die Vertiefung 104 eingebracht bzw. strukturiert wurde. Gemäß einem Ausführungsbeispiel der vorliegenden Erfindung, kann die Tiefe der Vertiefung 104 von 0,1 µm bis ca. 200 µm reichen.

Anschließend wird eine erste Isolationsschicht 116, wie dies in Fig. 2B dargestellt ist, ganzflächig auf das Substrat 108 und in die Vertiefung 104 aufgebracht, oder durch ein thermisches Verfahren ganzflächig aufgewachsen. Diese erste Isolationsschicht kann beispielsweise eine Siliziumdioxid-Schicht sein, die die Kapazität elektrisch gegenüber dem Substrat 108 isoliert. Ein Vorteil der Aufbringung dieser Isolationsschicht 116 besteht darin, daß ganzflächig ein Silizium-Siliziumdioxid-Schichtverbund erreicht wird, der für das spätere Bonden dieses Substratwafers 108 notwendig ist.

In der Vertiefung 104 wird die nicht-bewegliche Elektrode 102, z. B. aus Metall, strukturiert. Die Metallelektrode 102 liegt zumindest in dem Bereich, in dem sich später auch die bewegliche Elektrode befindet, vollständig in der Vertiefung 104, wie es in Fig. 2B zu erkennen ist. Die Tiefe der Vertiefung 104 übertrifft dabei die Höhe der Metall-Elektrode 102. bzw. der Leiterbahn, so daß die Siliziumdioxid-Schicht 116 über die gesamte Oberfläche des Substrats 108 bzw. über den gesamten Waferbereich die höchste Ebene definiert. Die maximale Höhe der Metallelektrode 102 ist somit durch die Tiefe der Vertiefung 104 bestimmt.

Nachfolgend wird, wie es in Fig. 2C dargestellt ist, z. B. mittels eines Sputter-Verfahrens ganzflächig eine zweite Isolationsschicht 118 aufgebracht. Im Bereich der Vertiefung 104 wird diese zweite Isolationsschicht wieder entfernt. Bei der zweiten Isolationsschicht kann es sich beispielsweise um eine Pyrex-Glas-Schicht oder eine Siliziumdioxid-Schicht handeln. Das Aufbringen und Strukturieren der zweiten Isolationsschicht 118 sind die letzten Prozeßschritte, bevor der zweite Silizium-Wafer 110 auf den Substratwafer 108 gebondet wird. Dies hat den Vorteil, daß die Pyrex-Glas-Schicht durch keine anderen Prozeßschritte belastet ist und somit noch alle Eigenschaften aufweist, die für ein zuverlässiges Bonden notwendig sind.

Nun wird, wie in Fig. 2D dargestellt ist, der zweite Silizium-Wafer 110 auf den strukturierten Substratwafer 108 gebondet, wobei gemäß dem bevorzugten Ausführungsbeispiel die Pyrex-Glas-Schicht bzw. die Siliziumdioxid-Schicht und das Silizium des sogenannten Deckelwafers 110 hier einen Silizium-Glas-Schichtverbund bildet, der für das anodische Bonden erforderlich ist. Zum Bonden steht somit ein Silizium-Siliziumdioxid-Pyrex-Glas-Silizium-Schichtverbund zur Verfügung, wodurch sichergestellt ist, daß kein Metall als Zwischenschicht diesen Vierlagen-Schichtverbund durchtrennt. Diese homogene Schichtverteilung über den gesamten Wafer führt zu einem sicheren und zuverlässigen Bondprozeß.

Ist der Deckelwafer bzw. die Funktionsschicht 110 auf dem Substratwafer bzw. dem Substrat 108 gebondet, wird der Deckelwafer 110 gedünnt und anschließend poliert. Die Höhe der Funktionsschicht 110 kann hierbei von ca. 2 µm bis ca. 50 µm variieren. Diese Variationsmöglichkeit der Dicke der Funktionsschicht ermöglicht die Einstellung der Steifigkeit der zu erzeugenden beweglichen Struktur unabhängig von der Maskengeometrie. Es ist lediglich erforderlich, die gebondeten Wafer auf die erwünschte Höhe zu dünnen, wodurch ermöglicht wird, die so hergestellten durchstimmbaren Kapazitäten an unterschiedliche Betätigungsspannungsbereiche anzupassen.

Nachdem der Deckelwafer 110 auf ein geeignetes Maß gedünnt ist, wird ein sogenanntes Bondpad 120 aus Metall strukturiert, wie es in Fig. 2D zu sehen ist. Dieses dient zum späteren Anschluß der beweglichen Elektrode an eine Spannungsversorgung.

Anschließend erfolgt die Strukturierung der beweglichen Elektrode 112 einschließlich der Federbalken 124 mittels Silizium-Tiefätzen in der Funktionsschicht 110 (siehe Fig. 2E).

Da sich unterhalb der Membran bzw. der beweglichen Elektrode 112 ein Luftraum 122 befindet, ist diese sofort beweglich, so daß auf einen Opferschichtätzprozeß verzichtet werden kann. Darüberhinaus besteht die Membran bzw. die bewegliche Elektrode 112 aus einkristallinem Silizium und ist somit eigenspannungsfrei. Hierdurch werden Verwerfungen und Deformationen verhindert, die sich auf das dynamische Verhalten der durchstimmbaren Kapazität auswirken würden.

Um eine hohe Güte Q des Bauteils zu erreichen, wird vorzugsweise gut leitendes, also hochdotiertes Silizium als Funktionswerkstoff verwendet. Hierzu kann beispielsweise ein hochdotierter Wafer als Deckelwafer 110 verwendet werden.

Um die Güte Q der sich ergebenden Kapazität weiter zu erhöhen, kann die obere bewegliche Elektrode 112 zusammen mit dem Bondpad 120 mit einer zusätzlichen Metallisierung versehen werden, um die Leitfähigkeit und damit deren Güte Q zu erhöhen. Die Metallisierung der beweglichen Elektrode 112 kann durch ein Sputter-Verfahren oder durch Aufdampfen und eine nachfolgende galvanische Verstärkung der Metall-Schicht erfolgen.

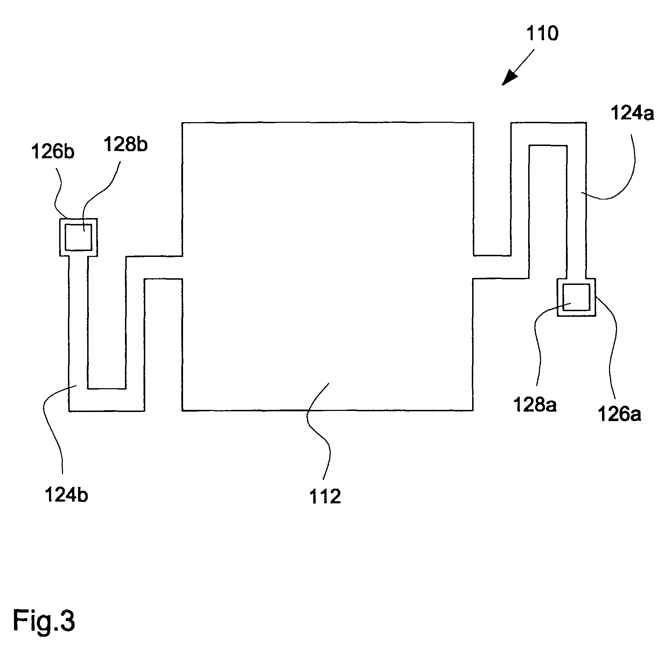

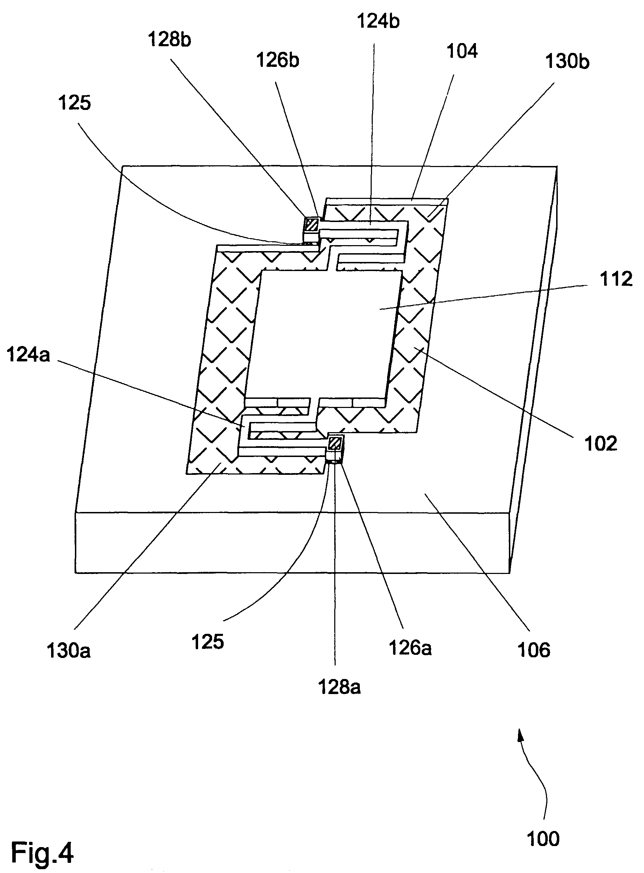

Nachfolgend wird anhand der Fig. 3 und 4 ein zweites bevorzugtes Ausführungsbeispiel der erfindungsgemäßen Kapazität näher beschrieben.

In Fig. 3 ist die Funktionsschicht 110 dargestellt, welches bereits strukturiert wurde, so daß die bewegliche Elektrode 112 gebildet ist. Wie aus Fig. 3 zu erkennen ist, ist die bewegliche Elektrode 112 an zwei Biegebalken 124a und 124b aufgehängt, wobei die Biegebalken 124a und 124b gefaltete Biegebalken sind. In Fig. 3 sind zwei Biegebalken vorgesehen, die mit zwei Punkten der beweglichen Elektrode 112 verbunden sind, jedoch können auch drei oder mehr Biegebalken vorgesehen sein, die mit entsprechenden Punkten der beweglichen Elektrode verbunden sind. Neben den gefalteten Biegebalken aus Fig. 3 können auch einfache Biegebalken, wie sie beispielsweise in Fig. 6A gezeigt sind, verwendet werden.

Bei der in Fig. 3 dargestellten Struktur sind auf den Biegebalken 124a und 124b entsprechende Abschnitte 126a und 126b vorgesehen, welche eine Verbindung zu dem Substrat, welches die nicht-bewegliche Elektrode trägt, herstellen, wie dies nachfolgend noch näher beschrieben wird. Auf den Abschnitten 126a und 126b sind metallische Anschlußflächen 128a und 128b vorgesehen, die den späteren Anschluß der beweglichen Elektrode 112 an eine Spannungsversorgung ermöglichen.

In Fig. 4 ist die erfindungsgemäße Kapazität 100 gemäß dem zweiten Ausführungsbeispiel mit der in Fig. 3 dargestellten Struktur der Funktionsschicht 110 dargestellt.

Wie zu erkennen ist, ist bei diesem Ausführungsbeispiel die Vertiefung 104 in dem ersten Substrat 108 derart gestaltet, daß diese nicht nur die nicht-bewegliche Elektrode 102 aufnimmt, sondern sich ferner über den Bereich der nicht-beweglichen Elektrode 102 erstreckt, so daß die Biegebalken 124a und 124b ebenfalls in einem Bereich oberhalb der Ausnehmung 104 befinden. Lediglich die Abschnitte 126a und 126b, an denen die Biegebalken 124a und 124b befestigt sind, sind über die Isolatorschicht 125 aus Pyrex-Glas und/oder SiO₂ mit dem ersten Substrat 108 verbunden.

Die Herstellung des in Fig. 4 dargestellten Ausführungsbeispiels der erfindungsgemäßen Kapazität erfolgt auf ähnliche Art und Weise, wie es anhand von Fig. 2 beschrieben wurde, wobei in diesem Zusammenhang jedoch darauf hingewiesen wird, daß die Strukturierung der Funktionsschicht 110 derart erfolgt, daß mit Ausnahme der Abschnitte 125, 126a und 126b sämtliche übrigen Abschnitte der Funktionsschicht 110, welche direkt in Kontakt mit dem ersten Substrat 106 sind, im wesentlichen entfernt werden. Wie schon bei dem anhand der Fig. 2 beschriebenen Beispiel, sind die Biegebalken 124a und 124b und die bewegliche Elektrode 112 sofort nach der Strukturierung beweglich, nachdem sich die nicht-bewegliche Elektrode 102 nicht über die Hauptoberfläche 106 des ersten Substrats 108 heraus erstreckt, so daß nach der Verbindung der Funktionsschicht 110 mit dem ersten Substrat 108 im Bereich der Vertiefung 104 zwischen dem ersten Substrat und dem zweiten Substrat ein Luftraum existiert. Bei dieser Anordnung ist die für manche Anwendungen störende Streukapazität der beweglichen Elektrode zum Substrat besonders gering.

Hinsichtlich der Biegebalken wird darauf hingewiesen, daß abhängig von der erwünschten Federsteifigkeit eine einfache (wie in Fig. 3 gezeigt) oder mehrfache Faltung der Biegebalken vorgesehen sein kann, um gegebenenfalls die Federsteifigkeit zu reduzieren.

Wie aus Fig. 4 ferner ersichtlich ist, weist die nicht-bewegliche Elektrode 102 Abschnitt 130a und 130b auf, die in der Vertiefung 104 derart angeordnet ist, daß sie aus dem Bereich der Vertiefung, der durch die bewegliche Elektrode des zweiten Substrats 110 überdeckt ist, herausgeführt sind und sich unter die Biegebalken 124a, 124b erstreckt.

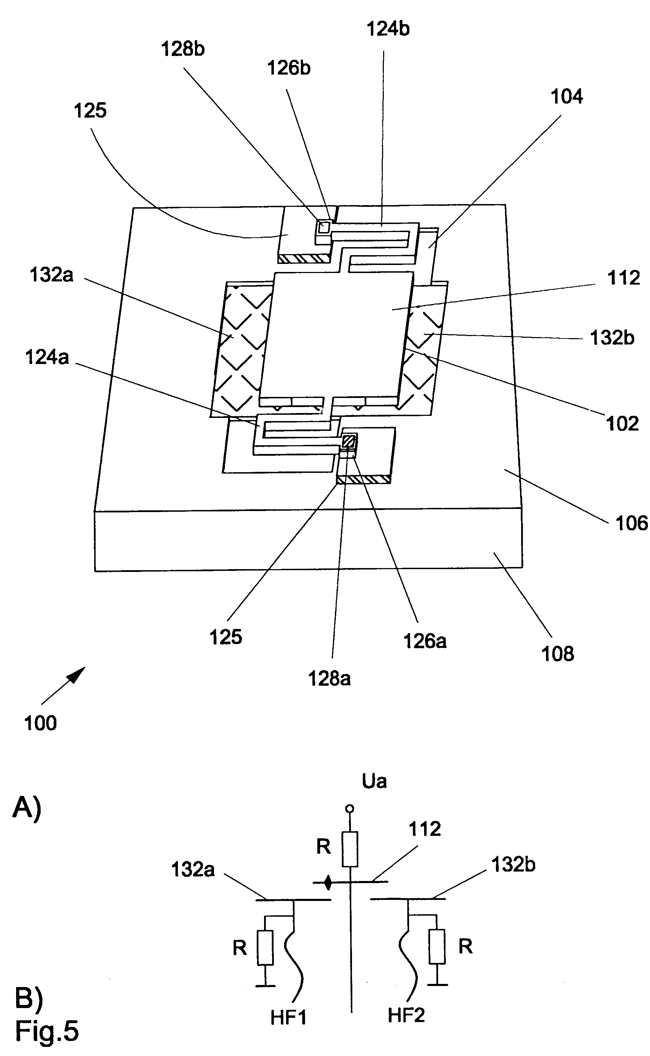

Nachfolgend wird anhand der Fig. 5 ein weiteres bevorzugtes Ausführungbeispiel der erfindungsgemäßen Kapazität näher beschrieben. Wie aus Fig. 5A zu erkennen ist, entspricht das dort dargestellte Kapazitätselement 100 im wesentlichen demjenigen, welches anhand der Fig. 4 beschrieben wurde, mit der Ausnahme, daß zum einen die herausgeführten Abschnitte 130a und 130b der festen Elektrode weggelassen sind, und zum anderen die feste Elektrode 102 in eine erste Teilelektrode 132a und eine zweite Teilelektrode 132b getrennt ist. Die Trennungslinie erstreckt sich in dem Bereich, in dem die Biegebalken mit der beweglichen Elektrode verbunden sind, und ist daher in Fig. 5 nicht zu sehen. Diese Teilung der nicht-beweglichen, unteren Elektrode 102 in zwei voneinander isolierte Elektroden 132a und 132b ermöglicht die Schaffung von zwei gleichspannungsfreien Hochfrequenzanschlüssen HF1 und HF2, wie dies in Fig. 5B dargestellt ist, welche ein Ersatzschaltbild der in Fig. 5A gezeigten Kapazität 100 darstellt. Die Widerstände R dienen hierbei zur Festlegung des Gleichspannungspotentials der Elektroden (Massepotential für die Elektrode 132a und die Elektrode 132b, bzw. Uₐ für die bewegliche Elektrode 112).

## Patentansprüche

1. Elektrostatisch durchstimmbare Kapazität, mit
einer nicht-beweglichen Elektrode (102), die in einer ersten Hauptoberfläche (106) eines Substrats (108) angeordnet ist; und
einer beweglichen Elektrode (112), die in einer Funktionsschicht (110), die mit dem Substrat (108) verbunden ist, in einem Bereich gebildet ist, der der nicht-beweglichen Elektrode (102) in dem Substrat (108) im wesentlichen gegenüberliegt;
wobei die nicht-bewegliche Elektrode (102) derart in einer Vertiefung (104) des Substrats (108) angeordnet ist, daß die nicht-bewegliche Elektrode (102) von der Funktionsschicht (112) beabstandet ist.

2. Elektrostatisch durchstimmbare Kapazität nach Anspruch 1, bei der die Funktionsschicht (110) eine vorbestimmte Dicke abhängig von einer vorbestimmten Steifigkeit der beweglichen Elektrode (112) bzw. der die bewegliche Elektrode tragenden Biegeelemente (124) hat.

3. Elektrostatisch durchstimmbare Kapazität nach Anspruch 1 oder 2, bei der die bewegliche Elektrode (112) durch eine Membran gebildet ist.

4. Elektrostatisch durchstimmbare Kapazität nach einem der Ansprüche 1 bis 3, bei der die Funktionsschicht (110) aus einem einkristallinen Halbleitermaterial besteht.

5. Elektrostatisch durchstimmbare Kapazität nach einem der Ansprüche 1 bis 4, bei der das Substrat (108) und die Funktionsschicht (110) durch Bonden verbunden sind.

6. Elektrostatisch durchstimmbare Kapazität nach einem der Ansprüche 1 bis 5, bei der die Funktionsschicht (110) derart strukturiert ist, daß ein oder mehrere Biegebalken (124a, 124b) die bewegliche Elektrode (112) tragen.

7. Elektrostatisch durchstimmbare Kapazität nach einem der Ansprüche 1 bis 6, bei der die Biegebalken (124a, 124b) einfach oder mehrfach gefaltet sind.

8. Elektrostatisch durchstimmbare Kapazität nach einem der Ansprüche 1 bis 7, bei der die bewegliche Elektrode (112) metallisiert ist.

9. Elektrostatisch durchstimmbare Kapazität nach einem der Ansprüche 1 bis 8, bei der die nicht-bewegliche Elektrode (102) in eine erste und eine zweite nicht-bewegliche Elektrode (132a, 132b) getrennt ist.

10. Verfahren zur Herstellung einer elektrostatisch durchstimmbaren Kapazität, mit folgenden Schritten:
a) Anordnen einer nicht-beweglichen Elektrode (102) in einer Vertiefung (104) in einer Hauptoberfläche (106) eines Substrats (108);
b) Aufbringen einer Funktionsschicht (110) auf der Hauptoberfläche (106) des Substrats (108), wobei die nicht-bewegliche Elektrode (102) nach dem Aufbringen der Funktionsschicht (110) von dieser beabstandet ist; und
c) Bilden einer beweglichen Elektrode (112) in der Funktionsschicht (110) in einem Bereich, der der Vertiefung (104) in dem Substrat (108) im wesentlichen gegenüberliegt.

11. Verfahren nach Anspruch 10, bei dem der Schritt a) folgende Schritte umfaßt:
a1) Ätzen des Substrats (108), um die Vertiefung (104) zu bilden;
a2) Aufbringen einer ersten Isolationsschicht (116) auf der Hauptoberfläche (106) und in der Vertiefung (104) des Substrats (108);
a3) Aufbringen und Strukturieren einer Metallschicht in der Vertiefung (104), um die nicht-bewegliche Elektrode (102) zu bilden, wobei die maximale Höhe der nicht-beweglichen Elektrode (102) durch die Tiefe der Vertiefung (104) bestimmt ist; und
a4) Aufbringen einer zweiten Isolationsschicht (118) auf einem Teil der ersten Isolationsschicht (116), der nicht die Vertiefung (104) umfaßt.

12. Verfahren nach Anspruch 10 oder 11, bei dem im Schritt b) die Funktionsschicht (110) auf das erste Substrat (108) gebondet wird.

13. Verfahren nach einem der Ansprüche 10 bis 12, bei dem im Schritt c) die Funktionsschicht (110) durch Ätzen strukturiert wird, um die bewegliche Elektrode (112) und die Biegebalken (124) zu bilden.

14. Verfahren nach einem der Ansprüche 10 bis 13, bei dem die Funktionschicht (110) vor dem Bilden der beweglichen Elektrode (112) gedünnt wird, um eine Steifigkeit der zu bildenden beweglichen Elektrode (112) bzw. des/der Biegebalken (124) auf einen vorbestimmten Wert einzustellen.

15. Verfahren nach einem der Ansprüche 10 bis 14, bei dem im Schritt c) die Funktionsschicht (110) durch Ätzen strukturiert wird, um eine Mehrzahl von Biegebalken (124a, 124b) zu bilden, die die bewegliche Membran tragen.

16. Verfahren nach Anspruch 15, bei dem die Biegebalken (124a, 124b) einfach oder mehrfach gefaltet sind.

17. Verfahren nach einem der Ansprüche 10 bis 16, mit folgendem Schritt:
Aufbringen einer Metallanschlußfläche (120; 128a, 128b) vor oder nach dem Bilden der beweglichen Elektrode (112) auf dem zweiten Substrat (110).

18. Verfahren nach einem der Ansprüche 10 bis 17, bei dem die Funktionsschicht (110) aus einem einkristallinen Material besteht.

19. Verfahren nach Anspruch 18, bei dem die Funktionsschicht (110) ein einkristallines Silizium-Substrat ist.

20. Verfahren nach einem der Ansprüche 10 bis 19, bei dem die Funktionsschicht (110) hoch dotiert ist.

21. Verfahren nach einem der Ansprüche 10 bis 20, mit folgendem Schritt:
d) Metallisieren der beweglichen Elektrode (112).

22. Verfahren nach einem der Ansprüche 10 bis 21, bei dem die nicht-bewegliche Elektrode (102) in eine erste und eine zweite Elektrode (132a, 132b) geteilt ist.
